(19) Europäisches Patentamt
European Patent Office
Office européen des brevets

(11) **EP 3 952 022 A1**

(12) **EUROPEAN PATENT APPLICATION**
published in accordance with Art. 153(4) EPC

(43) Date of publication:
**09.02.2022 Bulletin 2022/06**

(21) Application number: **20779586.5**

(22) Date of filing: **23.03.2020**

(51) International Patent Classification (IPC):
**H01Q 17/00** *(2006.01)*    **H05K 9/00** *(2006.01)*
**B32B 7/022** *(2019.01)*    **B32B 7/025** *(2019.01)*

(52) Cooperative Patent Classification (CPC):
**B32B 7/022; B32B 7/025; H01Q 17/00; H05K 9/00**

(86) International application number:
**PCT/JP2020/012757**

(87) International publication number:
**WO 2020/196420 (01.10.2020 Gazette 2020/40)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **26.03.2019   JP 2019057848
24.04.2019   JP 2019082842**

(71) Applicant: SEKISUI CHEMICAL CO., LTD.
**Osaka-shi
Osaka
530-8565 (JP)**

(72) Inventors:
• **NAKAO, Sachiko**
  **Gamagori-shi, Aichi 443-8623 (JP)**
• **SAWADAISHI, Tetsurou**
  **Gamagori-shi, Aichi 443-8623 (JP)**
• **MUTOU, Katsunori**
  **Gamagori-shi, Aichi 443-8623 (JP)**

(74) Representative: **Ter Meer Steinmeister & Partner
Patentanwälte mbB
Nymphenburger Straße 4
80335 München (DE)**

(54) **LAMBDA/4 TYPE RADIO WAVE ABSORBER**

(57)    An object is to provide a $\lambda/4$ radio wave absorber that has a higher bending resistance at low temperatures. The object is achieved by a $\lambda/4$ radio wave absorber comprising a resistive film, a dielectric layer, and a reflective layer, the dielectric layer having self-repairing properties, the self-repairing properties being defined such that a needle with a diameter of 0.5 mm is vertically inserted into the radio wave absorber from a surface on a side opposite to the reflective layer of the absorber to penetrate through to the rear surface of the radio wave absorber, the needle is removed 10 seconds after penetration, the result is left at room temperature for 7 days, and a value subsequently obtained by subtracting the thickness of the layers other than the dielectric layer and the reflective layer in the radio wave absorber from an average value (average hole depth) obtained by using a color 3D laser microscope (VK8710, produced by Keyence Corporation, or an equivalent product) to measure hole depths in 1000 discretionary points separated from each other by 5 $\mu$m on the side on which the holes are opened in the radio wave absorber is less than 4/5 of the thickness of the dielectric layer (or the sum of the thicknesses when the dielectric layer comprises multiple layers).

Fig. 1

EP 3 952 022 A1

**Description**

Technical Field

The present invention relates to a λ/4 radio wave absorber and related items.

Background Art

Mobile communication devices such as cellular phones and smartphones have rapidly become widespread. Automobiles, for example, have been equipped with many electronic devices. However, due to radio waves and noise generated from these devices, radio disturbances or malfunctions of other electronic devices frequently occur. To prevent these problems, such as radio disturbances and malfunctions, various radio wave absorbers have been studied.

Citation List

Patent Literature

PTL 1: JP2017-163141A

Summary of Invention

Technical Problem

λ/4 radio wave absorbers are required to exhibit long-term followability to curved surfaces depending on the part of device at which the λ/4 radio wave absorber is used. The present inventors conducted research and focused on the fact that conventional λ/4 radio wave absorbers exhibit insufficient followability to curved surfaces, and that when they are bent for a long period of time under severe conditions such as low temperatures, cracks occur due to material fatigue, which often makes the performance of λ/4 radio wave absorbers impossible to maintain. In the course of this research, the inventors also noticed increasing requirements for durability under temperature-changing conditions, since λ/4 radio wave absorbers are exposed to temperature-changing conditions in their application to, for example, automobiles.

Patent Literature (PTL) 1 proposes a λ/4 radio wave absorber suitable for use on curved portions; however, bending resistance under severe conditions such as low temperatures (bending resistance at low temperatures) is not taken into consideration.

Therefore, an object of the present invention is to provide a λ/4 radio wave absorber that has a higher bending resistance at low temperatures. Preferably, an object of the present invention is to provide a λ/4 radio wave absorber that also has durability under temperature-changing conditions.

Solution to Problem

In the course of their research, the inventors focused on the self-repairing properties of a dielectric layer after cracks are formed with a sharp device such as a cutter knife, and found that optimization of these properties can improve bending resistance at low temperatures. Based on these findings, the inventors conducted further research, and consequently found that the problems described above can be solved by a λ/4 radio wave absorber comprising a resistive film, a dielectric layer, and a reflective layer, the dielectric layer having self-repairing properties, the self-repairing properties being defined such that a needle with a diameter of 0.5 mm is vertically inserted into the radio wave absorber from a surface on a side opposite to the reflective layer of the absorber to penetrate through to the rear surface of the radio wave absorber, the needle is removed 10 seconds after penetration, the result is left at room temperature for 7 days, and a value subsequently obtained by subtracting the thickness of the layers other than the dielectric layer and the reflective layer in the radio wave absorber from an average value (average hole depth) obtained by using a color 3D laser microscope (VK8710, produced by Keyence Corporation, or an equivalent product) to measure hole depths in 1000 discretionary points separated from each other by 5 μm on the side on which the holes are opened in the radio wave absorber is less than 4/5 of the thickness of the dielectric layer (or the sum of the thicknesses when the dielectric layer comprises multiple layers).

The inventors further found that a λ/4 radio wave absorber that comprises a resistive film, a dielectric layer containing an adhesive having a gel fraction of 40 to 80%, and a reflective layer, exhibits not only bending resistance at low temperatures, but also durability under temperature-changing conditions.

The inventors conducted further research based on these findings, and completed the present invention.

Specifically, the present invention includes the following embodiments.

Item 1. A $\lambda$/4 radio wave absorber comprising a resistive film, a dielectric layer, and a reflective layer, the dielectric layer having self-repairing properties, the self-repairing properties being defined such that a needle with a diameter of 0.5 mm is vertically inserted into the radio wave absorber from a surface on a side opposite to the reflective layer of the absorber to penetrate through to the rear surface of the radio wave absorber, the needle is removed 10 seconds after penetration, the result is left at room temperature for 7 days, and a value subsequently obtained by subtracting the thickness of the layers other than the dielectric layer and the reflective layer in the radio wave absorber from an average value (average hole depth) obtained by using a color 3D laser microscope (VK8710, produced by Keyence Corporation, or an equivalent product) to measure hole depths in 1000 discretionary points separated from each other by 5 $\mu$m on the side on which the holes are opened in the radio wave absorber is less than 4/5 of the thickness of the dielectric layer (or the sum of the thicknesses when the dielectric layer comprises multiple layers).

Item 2. The $\lambda$/4 radio wave absorber according to Item 1, wherein the dielectric layer has a shear storage modulus of $8 \times 10^5$ Pa or less.

Item 3. The $\lambda$/4 radio wave absorber according to Item 1 or 2, wherein the dielectric layer is an adhesive.

Item 4. The $\lambda$/4 radio wave absorber according to any one of Items 1 to 3, wherein the dielectric layer has a glass-transition temperature of -80 to 30°C.

Item 5. The $\lambda$/4 radio wave absorber according to any one of Items 1 to 4, wherein the dielectric layer contains an adhesive having a gel fraction of 40 to 80%.

Item 6. The $\lambda$/4 radio wave absorber according to Item 5, wherein the dielectric layer has a relative permittivity of 1 to 10.

Item 7. The $\lambda$/4 radio wave absorber according to Item 5 or 6, wherein the adhesive contains a copolymer having a constituent unit derived from an alkyl (meth)acrylate containing 2 to 14 carbon atoms.

Item 8. The $\lambda$/4 radio wave absorber according to Item 7, wherein the copolymer has a constituent unit derived from an olefin polymer.

Item 9. The $\lambda$/4 radio wave absorber according to any one of Items 5 to 8, wherein the adhesive contains fine particles with an average particle size of 5 to 150 $\mu$m in an amount of 0.15 to 15 wt%.

Item 10. A $\lambda$/4 radio wave absorber comprising a resistive film, a dielectric layer containing an adhesive having a gel fraction of 40 to 80%, and a reflective layer.

Item 11. A millimeter-wave radar comprising the $\lambda$/4 radio wave absorber of any one of Items 1 to 10.

Item 12. A $\lambda$/4 radio wave absorber member comprising a resistive film and a dielectric layer, the dielectric layer having self-repairing properties, the self-repairing properties being defined such that a needle with a diameter of 0.5 mm is vertically inserted into the radio wave absorber member from a surface of the resistive film not facing the dielectric layer to penetrate through to the rear surface of the radio wave absorber member, the needle is removed 10 seconds after penetration, the result is left at room temperature for 7 days, and a value subsequently obtained by subtracting the thickness of the layers other than the dielectric layer in the radio wave absorber member from an average value (average hole depth) obtained by using a color 3D laser microscope (VK8710, produced by Keyence Corporation, or an equivalent product) to measure hole depths in 1000 discretionary points separated from each other by 5 $\mu$m on the side on which the holes are opened in the radio wave absorber member is less than 4/5 of the thickness of the dielectric layer (or the sum of the thicknesses when the dielectric layer comprises multiple layers).

Item 13: A $\lambda$/4 radio wave absorber member comprising a support, a resistive film, and a dielectric layer containing an adhesive having a gel fraction of 40 to 80%.

Advantageous Effects of Invention

The present invention provides a $\lambda$/4 radio wave absorber that has a higher bending resistance at low temperatures. In a preferred embodiment, the present invention provides a $\lambda$/4 radio wave absorber that has durability under temperature-changing conditions.

Brief Description of Drawings

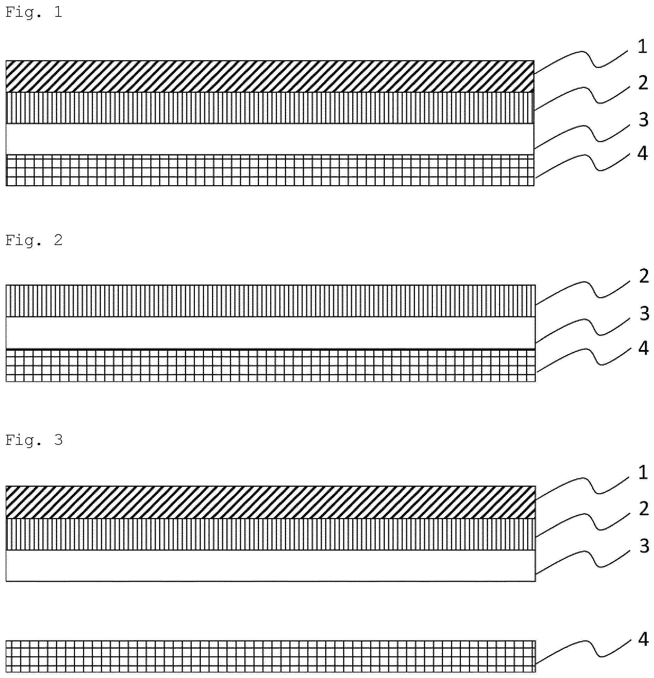

    Fig. 1 illustrates the schematic cross-section of the $\lambda$/4 radio wave absorber according to an embodiment of the present invention.

    Fig. 2 illustrates the schematic cross-section of the $\lambda$/4 radio wave absorber according to an embodiment of the present invention.

    Fig. 3 illustrates on the upper side the schematic cross-section of the $\lambda$/4 radio wave absorber member according to an embodiment of the present invention, and on the lower side the schematic cross section of an adherend that is arranged so that the radio wave absorber member comes into contact with the adherend, and that functions as a reflective layer in an embodiment of the invention.

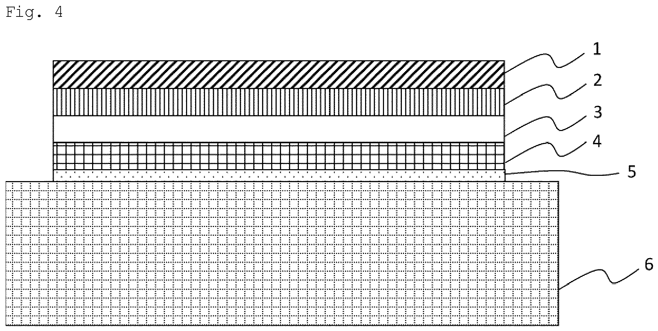

Fig. 4 illustrates a schematic cross-section that illustrates an application of the λ/4 radio wave absorber according to an embodiment of the present invention. (In this embodiment, the λ/4 radio wave absorber is disposed on a chassis through an adhesive.)

Description of Embodiments

In the present specification, the terms "comprise," "contain," and "include" includes the concepts of comprising, containing, including, consisting essentially of, and consisting of.

In one embodiment, the present invention relates to a λ/4 radio wave absorber comprising a resistive film, a dielectric layer, and a reflective layer, the dielectric layer having self-repairing properties, the self-repairing properties being defined such that a needle with a diameter of 0.5 mm is vertically inserted into the radio wave absorber from a surface on a side opposite to the reflective layer of the absorber to penetrate through to the rear surface of the radio wave absorber, the needle is removed 10 seconds after penetration, the result is left at room temperature for 7 days, and a value subsequently obtained by subtracting the thickness of the layers other than the dielectric layer and the reflective layer in the radio wave absorber from an average value (average hole depth) obtained by using a color 3D laser microscope (VK8710, produced by Keyence Corporation, or an equivalent product) to measure hole depths in 1000 discretionary points separated from each other by 5 $\mu$m on the side on which the holes are opened in the radio wave absorber is less than 4/5 of the thickness of the dielectric layer (or the sum of the thicknesses when the dielectric layer comprises multiple layers). In one embodiment, the present invention also relates to a λ/4 radio wave absorber comprising a resistive film, a dielectric layer containing an adhesive having a gel fraction of 40 to 80%, and a reflective layer. In the present specification, these are sometimes collectively referred to as "the radio wave absorber of the present invention." The details are described below.

1. Characteristics

In one embodiment, the radio wave absorber of the present invention has a characteristic, which is that the dielectric layer has self-repairing properties, the self-repairing properties being defined such that a needle with a diameter of 0.5 mm is vertically inserted into the radio wave absorber from a surface on a side opposite to the reflective layer of the absorber to penetrate through to the rear surface of the radio wave absorber, the needle is removed 10 seconds after penetration, the result is left at room temperature for 7 days, and a value subsequently obtained by subtracting the thickness of the layers other than the dielectric layer and the reflective layer in the radio wave absorber from an average value (average hole depth) obtained by using a color 3D laser microscope (VK8710, produced by Keyence Corporation, or an equivalent product) to measure hole depths in 1000 discretionary points separated from each other by 5 $\mu$m on the side on which the holes are opened in the radio wave absorber is less than 4/5 of the thickness of the dielectric layer (or the sum of the thicknesses when the dielectric layer comprises multiple layers). This characteristic enables the radio wave absorber of the present invention to exhibit a sufficient bending resistance at low temperatures. More specifically, for example, when the radio wave absorber of the present invention is bent for a long time under low-temperature conditions, the occurrence of cracks in the dielectric layer can be suppressed, and a high level of performance as a λ/4 radio wave absorber can be maintained.

The self-repairing properties can be adjusted based on the storage modulus, gel fraction, Tg, molecular weight, monomer composition, etc., of the dielectric layer as described below.

2. Structure

The radio wave absorber of the present invention comprises a resistive film including a resistive layer, a dielectric layer, and a reflective layer. Each structure is described below.

2-1. Resistive Film

The resistive film can be any resistive film that includes a layer that functions as a resistive layer in radio wave absorbers.

The surface resistance value of the resistive film is not particularly limited. The surface resistance value of the resistive film is, for example, 100 to 800 $\Omega/\square$. In this range, the surface resistance value is preferably 150 to 750 $\Omega/\square$, and more preferably 200 to 600 $\Omega/\square$. In some embodiments, the surface resistance value is, for example, 100 to 1000 $\Omega/\square$, preferably 200 to 700 $\Omega/\square$, and more preferably 250 to 600 $\Omega/\square$.

In the present specification, the surface resistance value can be measured by four-terminal sensing with a surface resistance tester (Loresta-EP, trade name, produced by Mitsubishi Chemical Analytech Co., Ltd.). The measurement can also be performed by using a non-destructive (eddy current) sheet resistance/resistivity measurement instrument (EC-80P, produced by Napson Corporation, or an equivalent product).

The thickness of the resistive film is not particularly limited. The thickness of the resistive film is, for example, 1 to 200 nm, preferably 2 to 100 nm, and more preferably 2 to 50 nm. In some embodiment, the thickness is, for example, 5 to 100 nm, preferably 7 to 70 nm, and more preferably 10 to 50 nm.

The layer structure of the resistive film is not particularly limited. The resistive film may be composed of a single layer, or a combination of two or more layers.

2-1-1. Resistive Layer

The resistance value of the resistive layer is not particularly limited. The resistance value of the resistive layer is, for example, 100 to 800 $\Omega/\square$. In this range, the resistance value is preferably 150 to 750 $\Omega/\square$, and more preferably 200 to 600 $\Omega/\square$. In some embodiments, the resistance value is, for example, 100 to 1000 $\Omega/\square$, preferably 200 to 700 $\Omega/\square$, and more preferably 250 to 600 $\Omega/\square$.

The thickness of the resistive layer is not particularly limited. The thickness of the resistive layer is, for example, 1 to 200 nm, preferably 2 to 100 nm, and more preferably 2 to 50 nm. In some embodiments, the thickness is, for example, 2 to 100 nm, preferably 3 to 70 nm, and more preferably 5 to 50 nm.

The layer structure of the resistive layer is not particularly limited. The resistive layer may be composed of a single resistive layer, or a combination of two or more resistive layers.

The resistive layer typically includes, for example, an ITO-containing resistive layer and a molybdenum-containing resistive layer. These layers are described below.

2-1-1-1. ITO-containing Resistive Layer

The resistive layer for use is, for example, indium tin oxide ("ITO" below). In particular, a resistive layer containing ITO that contains 1 to 40 wt%, more preferably 2 to 35 wt% of $SnO_2$, is preferable for use from the standpoint of the highly stable amorphous structure and suppressed changes in sheet resistance of the resistive layer in hot and humid conditions. In the resistive layer, the content of ITO is, for example, 50 mass% or more, preferably 70 mass% or more, more preferably 90 mass% or more, and still more preferably 95 mass% or more; and typically less than 100 mass%).

2-1-1-2. Molybdenum-containing Resistive Layer

The resistive layer for use preferably contains molybdenum from the standpoint of durability and the ease of adjusting sheet resistance. The lower limit of the content of molybdenum is not particularly limited; from the standpoint of increasing durability, the lower limit of the content of molybdenum is preferably 5 wt%, more preferably 7 wt%, still more preferably 9 wt%, yet more preferably 11 wt%, particularly preferably 13 wt%, very preferably 15 wt%, and most preferably 16 wt%. The upper limit of the content of molybdenum is preferably 30 wt%, more preferably 25 wt%, and still more preferably 20 wt% from the standpoint of the ease of adjusting the surface resistance value.

More preferably, the resistive layer that contains molybdenum further contains nickel and chromium. A resistive layer containing nickel and chromium in addition to molybdenum leads to a radio wave absorber with excellent durability. Examples of alloys containing nickel, chromium, and molybdenum include a variety of alloy grades such as Hastelloy B-2, B-3, C-4, C-2000, C-22, C-276, G-30, N, W, and X.

The resistive layer containing molybdenum, nickel, and chromium preferably contains molybdenum in an amount of 5 wt% or more, nickel in an amount of 40 wt% or more, and chromium in an amount of 1 wt% or more. The resistive film containing molybdenum, nickel, and chromium in amounts within these ranges leads to a radio wave absorber with further improved durability. The resistive film more preferably contains molybdenum in an amount of 7 wt% or more, nickel in an amount of 45 wt% or more, and chromium in an amount of 3 wt% or more. The resistive film still more preferably contains molybdenum in an amount of 9 wt% or more, nickel in an amount of 47 wt% or more, and chromium in an amount of 5 wt% or more. The resistive film yet more preferably contains molybdenum in an amount of 11 wt% or more, nickel in an amount of 50 wt% or more, and chromium in an amount of 10 wt% or more. The resistive film particularly preferably contains molybdenum in an amount of 13 wt% or more, nickel in an amount of 53 wt% or more, and chromium in an amount of 12 wt% or more. The resistive film very preferably contains molybdenum in an amount of 15 wt% or more, nickel in an amount of 55 wt% or more, and chromium in an amount of 15 wt% or more. The resistive film most preferably contains molybdenum in an amount of 16 wt% or more, nickel in an amount of 57 wt% or more, and chromium in an amount of 16 wt% or more. Additionally, the nickel content in the resistive film is preferably 80 wt% or less, more preferably 70 wt% or less, and still more preferably 65 wt% or less. The upper limit of the chromium content is preferably 50 wt% or less, more preferably 40 wt% or less, and still more preferably 35 wt% or less.

The resistive layer may further contain metals other than molybdenum, nickel, or chromium. Examples of such metals include iron, cobalt, tungsten, manganese, and titanium. The upper limit of the total content of metals other than molybdenum, nickel, and chromium in the resistive layer containing molybdenum, nickel, and chromium is preferably 45 wt%, more preferably 40 wt%, still more preferably 35 wt%, yet more preferably 30 wt%, particularly preferably 25 wt%, and very preferably 23 wt% from the standpoint of durability of the resistive layer. The lower limit of the total content of metals other than molybdenum, nickel, and chromium is, for example, 1 wt% or more.

When the resistive layer contains iron, the upper limit of the content of iron is preferably 25 wt%, more preferably 20 wt%, and still more preferably 15 wt%, with the lower limit being preferably 1 wt%, from the standpoint of durability of the resistive layer. When the resistive layer contains cobalt and/or manganese, the upper limit of the content of each metal is independently preferably 5 wt%, more preferably 4 wt%, and still more preferably 3 wt%, with the lower limit being preferably 0.1 wt%, from the standpoint of durability of the resistive layer. When the resistive layer contains tungsten, the upper limit of the content of tungsten is preferably 8 wt%, more preferably 6 wt%, and still more preferably 4 wt%, with the lower limit being preferably 1 wt%, from the standpoint of durability of the resistive layer.

The resistive layer may contain silicon and/or carbon. The resistive layer containing silicon and/or carbon contains silicon and/or carbon in an individual amount of preferably 1 wt% or less, and more preferably 0.5 wt% or less.

The resistive layer containing silicon and/or carbon contains silicon and/or carbon in an individual amount of preferably 0.01 wt% or more.

2-1-2. Barrier Layer

From the standpoint of durability, the resistive film preferably further includes a barrier layer. The barrier layer is disposed on at least one surface of the resistive layer. When the barrier layer is disposed only on one surface, the barrier layer is preferably disposed on the surface of the resistive layer not facing the dielectric layer. The barrier layer is described in detail below.

The barrier layer can be any layer that can protect the resistive layer, and that can suppress degradation of the resistive layer. The material for the barrier layer can be, for example, a metal compound, and a metalloid compound, and preferably an oxide of a metal or metalloid, a nitride, and a nitride oxide. The barrier layer may contain components other than these materials to the extent that the effect of the present invention is not significantly impaired. In this case, the content of the material described above in the barrier layer is, for example, 80 mass% or more, preferably 90 mass% or more, more preferably 95 mass% or more, and still more preferably 99 mass% or more; and typically less than 100 mass%.

Examples of metal elements contained in the barrier layer include titanium, aluminum, niobium, cobalt, and nickel. Examples of metalloid elements contained in the barrier layer include silicon, germanium, antimony, and bismuth.

Examples of oxides of a metal or metalloid element include compounds represented by MOx wherein X represents a number that satisfies the formula $n/100 \leq X \leq n/2$ (n representing the valence of a metal or metalloid), and M represents a metal or metalloid element.

Examples of nitrides include compounds represented by $MN_y$ wherein Y represents a number that satisfies the formula $n/100 \leq Y \leq n/3$ (n representing the valence of a metal or metalloid), and M represents a metal or metalloid element.

Examples of nitride oxides include compounds represented by $MO_xN_y$ wherein X and Y satisfy the following: $n/100 \leq X$, $n/100 \leq Y$, and $X + Y \leq n/2$ (n representing the valence of a metal or metalloid), and M represents a metal or metalloid element.

Regarding the oxidation number X of an oxide or nitride oxide, for example, elemental analysis of the cross-sectional surface of a layer containing $MO_x$ or $MO_xN_y$ is performed with an FE-TEM-EDX (e.g., JEM-ARM200F produced by JEOL Ltd.), and then X is calculated from the element ratio of M and O per area of the cross-sectional surface of the layer containing $MO_x$ or $MO_xN_y$. From this calculation, the valence of the oxygen atom can be determined.

Regarding the nitridation number Y of a nitride or nitride oxide, for example, elemental analysis of the cross-sectional surface of a layer containing $MN_y$ or $MO_xN_y$ is performed with an FE-TEM-EDX (e.g., JEM-ARM200F produced by JEOL Ltd.), and then Y is calculated from the element ratio of M and N per area of the cross-sectional surface of the layer containing $MN_y$ or $MO_xN_y$. From this calculation, the valence of the nitrogen atom can be determined.

Specific examples of materials of the barrier layer include $SiO_2$, $SiO_x$, $Al_2O_3$, $MgAl_2O_4$, CuO, CuN, $TiO_2$, TiN, and AZO (aluminum-doped zinc oxide).

The thickness of the barrier layer can be any thickness. The thickness of the barrier layer is, for example, 0.1 to 40 nm, preferably 0.5 to 30 nm, and more preferably 1 to 20 nm. In some embodiments, the thickness is, for example, 1 to 200 nm, preferably 1 to 100 nm, and more preferably 1 to 20 nm. The thickness is preferably 10 nm or less from the standpoint of productivity.

The layer structure of the barrier layer is not particularly limited. The barrier layer may be composed of a single barrier layer, or a combination of two or more barrier layers.

2-2. Dielectric Layer

The dielectric layer can be any dielectric layer that can function as a dielectric for a target wavelength in a radio wave absorber; and that has, in some embodiments, self-repairing properties as stated above, the self-repairing properties being defined such that a needle with a diameter of 0.5 mm is vertically inserted into the radio wave absorber from a surface on a side opposite to the reflective layer of the absorber to penetrate through to the rear surface of the radio wave absorber, the needle is removed 10 seconds after penetration, the result is left at room temperature for 7 days, and a value subsequently obtained by subtracting the thickness of the layers other than the dielectric layer and the reflective layer in the radio wave absorber from an average value (average hole depth) obtained by using a color 3D laser microscope (VK8710, produced by Keyence Corporation, or an equivalent product) to measure hole depths in 1000 discretionary points separated from each other by 5 $\mu$m on the side on which the holes are opened in the radio wave absorber is less than 4/5 of the thickness of the dielectric layer (or the sum of the thicknesses when the dielectric layer comprises multiple layers). Examples of dielectric layers include, but are not limited to, resin sheets and adhesives. Of these, adhesives are preferred from the standpoint of more easily achieving self-repairing properties.

In some embodiments, the dielectric layer includes a dielectric layer that contains an adhesive that has a gel fraction of 40 to 80%. This structure enables the radio wave absorber of the present invention to exert durability under temperature-changing conditions. The gel fraction is preferably 50 to 80%, and more preferably 50 to 75%.

The relative permittivity of the dielectric layer is not particularly limited. The relative permittivity of the dielectric layer is, for example, 1 to 20. The relative permittivity is preferably 1 or more, more preferably 1.5 or more, still more preferably 2 or more, and even more preferably 2.1 or more, from the standpoint of wave absorption etc. The relative permittivity is preferably 20 or less, more preferably 15 or less, and still more preferably 5 or less, from the standpoint of improving radio wave absorption in a wide bandwidth. In some embodiments, the relative permittivity is, for example, 0.5 to 10, preferably 0.8 to 7, and more preferably 1 to 5.

The relative permittivity of the dielectric layer can be determined by measuring relative permittivity at 10 GHz by the cavity perturbation method with, for example, a network analyzer or cavity resonator.

The thickness of the dielectric layer is not particularly limited, and is, for example, 50 to 2000 $\mu$m, preferably 100 to 1000 $\mu$m, and more preferably 200 to 800 $\mu$m. In some embodiments, the thickness is, for example, 200 to 800 $\mu$m. The thickness is preferably 300 to 700 $\mu$m, and more preferably 400 to 600 $\mu$m, from the standpoint of durability etc. under temperature-changing conditions.

The thickness of the dielectric layer can be measured with an MS-11C measurement stand and a DIGIMICRO MFC-101 counter (Nikon Corporation).

The shear storage modulus of the dielectric layer is preferably $1 \times 10^4$ to $8 \times 10^5$ Pa, from the standpoint of particularly easily achieving self-repairing properties. The shear storage modulus is more preferably $2 \times 10^4$ to $7 \times 10^5$ Pa, and still more preferably $3 \times 10^4$ to $6 \times 10^5$ Pa.

The shear storage modulus can be measured by the following method.

The shear storage modulus is a value measured with a dynamic viscoelasticity measuring apparatus (ARES-G2, produced by TA Instruments Japan Inc., or an equivalent product) at a frequency of 10 Hz in the temperature range of -100°C to 250°C at a temperature rise rate of 5°C/min.

The glass-transition temperature of the dielectric layer is preferably -80°C to 0°C from the standpoint of particularly easily achieving self-repairing properties even in a low-temperature region. The glass-transition temperature is more preferably -75°C to -1°C, and still more preferably -70°C to - 2°C.

The glass-transition temperature can be measured by the following method.
The measurement is performed with a dynamic viscoelasticity measuring apparatus (ARES-G2, produced by TA Instruments Japan Inc., or an equivalent product) at a frequency of 10 Hz in the temperature range of -100°C to 250°C at a temperature rise rate of 5°C/min, and a glass-transition temperature Tg is determined.

The layer structure of the dielectric layer is not particularly limited. The dielectric layer may be composed of a single dielectric layer, or a combination of two or more dielectric layers. Examples include a dielectric layer formed only of an adhesive; and a dielectric layer in which a non-adhesive dielectric layer and a dielectric layer formed of an adhesive are stacked on each other. In the latter, for example, from the standpoint of more easily achieving self-repairing properties, and from the standpoint of durability under temperature-changing conditions, the thickness of the dielectric layer formed of an adhesive, is, for example, 70% or more, preferably 80% or more, more preferably 90% or more, still more preferably 95% or more, and even more preferably 99% or more, and less than 100%, in the total thickness of the dielectric layer, which is taken as 100%.

2-2-1. Adhesive

Examples of adhesives include, but are not particularly limited to, acrylic adhesives, urethane adhesives, polyolefin adhesives, polyester adhesives, vinyl alkyl ether adhesives, polyamide adhesives, rubber adhesives, silicone adhesives, and fluorine adhesives. Of these, acrylic adhesives are preferred from the standpoint of excellent weather resistance and durability under temperature-changing conditions.

The acrylic adhesives may be any acrylic adhesive. From the standpoint of easily achieving self-repairing properties, and achieving both the thickness and relative permittivity suitable for radio wave absorbers at the same time, preferable acrylic adhesives are:
acrylic adhesives containing a (meth)acrylate copolymer having a constituent unit derived from an alkyl (meth)acrylate containing 2 to 14 carbon atoms.

The acrylic adhesives are described in detail below.

Examples of alkyl (meth)acrylates containing 2 to 14 carbon atoms include ethyl (meth)acrylate, n-propyl (meth)acrylate, isopropyl (meth)acrylate, n-butyl (meth)acrylate, isobutyl (meth)acrylate, t-butyl (meth)acrylate, pentyl (amyl)(meth)acrylate, hexyl (meth)acrylate, heptyl (meth)acrylate, 2-ethylhexyl (meth)acrylate, n-octyl (meth)acrylate, isooctyl (meth)acrylate, nonyl (meth)acrylate, decyl (meth)acrylate, undecyl (meth)acrylate, lauryl (dodecyl(meth))acrylate, tridecyl (meth)acrylate, and tetradecyl (meth)acrylate.

Of the above alkyl (meth)acrylates containing 2 to 14 carbon atoms, alkyl (meth)acrylates with an alkyl group containing 4 to 10 carbon atoms are preferably used from the standpoint of adjusting the glass-transition temperature (Tg), and from the standpoint of compatibility etc. These alkyl (meth)acrylates containing 2 to 14 carbon atoms may be used singly, or in a combination of two or more.

The term "(meth)acrylate" refers to "acrylate" or "methacrylate."

In the (meth)acrylate copolymer, the content of the constituent unit derived from an alkyl (meth)acrylate containing 2 to 14 carbon atoms is preferably 60 to 99.9 wt%, and more preferably 80 to 99.9 wt%.

The (meth)acrylate copolymer preferably further has a constituent unit derived from a polar group-containing vinyl monomer. When the copolymer has a constituent unit derived from a polar group-containing vinyl monomer, the Tg, adhesiveness, etc. of the copolymer can be adjusted, and furthermore, the rough surface adhesiveness and cohesive force of the adhesive can be improved. Examples of the polar group-containing vinyl monomer include styrene monomers, such as styrene, $\alpha$-methylstyrene, o-methylstyrene, and p-methylstyrene; carboxylic acid vinyl esters, such as vinyl acetate; vinyl group-containing carboxylic acids, such as (meth)acrylic acid and itaconic acid; anhydrides of the vinyl group-containing carboxylic acids; hydroxyl group-containing vinyl monomers, such as 2-hydroxyethyl (meth)acrylate, 2-hydroxypropyl (meth)acrylate, 4-hydroxybutyl (meth)acrylate, caprolactone-modified (meth)acrylate, polyoxyethylene (meth)acrylate, and polyoxypropylene (meth)acrylate; and nitrogen-containing vinyl monomers, such as (meth)acrylonitrile, N-vinylpyrrolidone, N-vinylcaprolactam, N-vinyllaurylolactam, (meth)acryloylmorpholine, (meth)acrylamide, dimethyl(meth)acrylamide, N-methylol(meth)acrylamide, N-butoxymethyl(meth)acrylamide, and dimethylaminomethyl (meth)acrylate.

The polar group-containing vinyl monomers may be used singly, or in a combination of two or more.

The content of the constituent unit derived from a polar group-containing vinyl monomer in the (meth)acrylate copolymer is preferably 0.1 to 20 wt% from the standpoint of flexibility of the resulting adhesive, as well as peeling force etc.

The (meth)acrylate copolymer preferably further contains a constituent unit derived from a crosslinkable functional group-containing monomer. When the constituent unit derived from a crosslinkable functional group-containing monomer is contained, the gel fraction of the acrylic adhesive is easily adjusted. Examples of the crosslinkable functional group-containing monomers include multifunctional (meth)acrylates and compounds with a plurality of functional groups that react with the polar groups of the polar group-containing vinyl monomers. Examples of these monomers include hexanediol di(meth)acrylate, polyethylene glycol di(meth)acrylate, polypropylene glycol di(meth)acrylate, ethoxylated bisphenol A di(meth)acrylate, tris(2-hydroxyethyl)isocyanurate triacrylate, ethoxylated trimethylolpropane triacrylate, proxylated trimethylolpropane triacrylate, proxylated glyceryl triacrylate, neopentyl glycol adipate diacrylate, urethane acrylate, epoxy acrylate, polyester acrylate, and liquid hydrogenated 1,2 polybutadiene acrylate. Of these, the use of those with a molecular weight of 400 or more, and more preferably 800 or more, can provide an excellent balance between cohesive force and adhesiveness of the resulting adhesive.

The content of the constituent unit derived from a crosslinkable functional group-containing monomer in the (meth)acrylate copolymer is preferably 0.02 to 5 parts by weight, and more preferably 0.05 to 2 parts by weight.

From the standpoint of, for example, achieving durability under temperature-changing conditions, and achieving both the thickness and relative permittivity suitable for radio wave absorbers at the same time, the acrylic adhesive is particularly preferably, for example, an acrylic adhesive with structure (1), and more preferably an acrylic adhesive with one of or both structures (2) and (3), in addition to structure (1).

(1) containing a (meth)acrylate copolymer with a constituent unit derived from an alkyl (meth)acrylate containing 2 to 14 carbon atoms.
(2) containing a (meth)acrylate copolymer with a constituent unit derived from an olefin polymer.
(3) containing fine particles with an average particle size of 5 to 150 $\mu$m in an amount of 0.15 to 15 wt%.

The acrylic adhesives described above can be obtained by photopolymerization of a polymerizable composition comprising, for example, an alkyl(meth)acrylate containing 2 to 14 carbon atoms, an olefin polymer having a polymerizable unsaturated double bond at the terminal, and fine particles with an average particle size of 5 to 150 $\mu$m.

From the same standpoint, the acrylic adhesive is particularly preferably, for example, (a) an acrylic adhesive containing an acrylic copolymer obtained by photopolymerization of a monomer component containing an alkyl(meth)acrylate having an alkyl group containing 2 to 14 carbon atoms and a polar group-containing vinyl monomer, with the acrylic monomers taken as the main component, with a polymerizable composition comprising an olefin polymer having a polymerizable unsaturated double bond at the terminal, and a photopolymerization initiator.

The (meth)acrylate copolymer preferably has a constituent unit derived from an olefin polymer.

Specific examples of polyolefin polymers in the constituent unit derived from an olefin polymer include ethylene-butylene copolymers, ethylene-propylene copolymers, ethylene copolymers, and butylene copolymers.

The content of the constituent unit derived from an olefin polymer in the (meth)acrylate copolymer is preferably 0.01 to 30 wt%, particularly preferably 0.1 to 25 wt%, and still more preferably 0.5 to 20 wt%. When the content of the constituent unit derived from an olefin polymer is in the above range, the adhesiveness is further improved. Further, the gel fraction is easily adjusted.

The (meth)acrylate copolymer that has a constituent unit derived from an olefin polymer can be synthesized by polymerizing a monomers derived from the above constituent units and an olefin polymer having a polymerizable unsaturated double bond at the terminal.

The olefin polymer having a polymerizable unsaturated double bond at the terminal may be any olefin polymer that has at the terminal a double bond copolymerizable with other polymerizable monomers, and has a polymer structure in which the polyolefin polymer mentioned above serves as the main skeleton.

Examples of commercially available olefin polymers having a polymerizable unsaturated double bond at the terminal include Kraton Liquid Polymer L-1251 and Kraton Liquid Polymer L-1253 (the main skeleton being an ethylene-butylene copolymer), produced by Kraton Polymers Japan Ltd.

The (meth)acrylate copolymer may further has a constituent unit derived from benzyl acrylate, phenoxyethyl acrylate, etc.

The (meth)acrylate copolymer may be synthesized by polymerization of monomers of the above constituent units and optionally other components, such as a polymerizable composition comprising an olefin polymer having a polymerizable unsaturated double bond at the terminal, an additive, etc., in the presence of a polymerization initiator. The polymerization method may be any conventionally known method. Examples include solution polymerization (boiling-point polymerization or constant-temperature polymerization), emulsion polymerization, suspension polymerization, and bulk polymerization. Of these, photopolymerization is preferred for its excellent dispersibility of the various additives described below.

The polymerization initiator for use may be any polymerization initiator, and is preferably a photopolymerization initiator. Examples of photopolymerization initiators include ketone-based initiators, such as 4-(2-hydroxyethoxy)phenyl(2-hydroxy-2-propyl)ketone (trade name: Darocur 2959, produced by Merck);

acetophenone-based initiators, such as $\alpha$-hydroxy-$\alpha$,$\alpha$-dimethyl-acetophenone (trade name: Darocur 1173, Merck), methoxyacetophenone, 2,2-dimethoxy-2-phenylacetophenone (trade name: Irgacure 651, Ciba-Geigy), and 2-hydroxy-2-cyclohexylacetophenone (trade name: Irgacure 184, produced by Ciba-Geigy); ketal-based initiators, such as benzyldimethylketal; and other initiators, such as halogenated ketones, acylphosphinoxides, and acylphosphonates.

The amount of these photopolymerization initiators added is preferably 0.01 to 5 parts by weight, and more preferably 0.03 to 1.0 parts by weight, per 100 parts by weight of the monomer components of the above constituent units.

The amount of photoinitiator added is preferably 0.01 parts by weight or more from the standpoint of suppressing the decrease in polymerization conversion, and reducing the monomer odor of the resulting polymer. The amount is preferably 5 parts by weight or less from the standpoint of suppressing the radical generation amount, preventing a decrease in the molecular weight of the acrylic copolymer, and obtaining excellent cohesive force.

The lamps for light irradiation for use in the photopolymerization may be any lamp that has an emission distribution at light wavelengths of 400 nm or less. Specific examples include low-pressure mercury lamps, medium-pressure mercury lamps, high-pressure mercury lamps, super high-pressure mercury lamps, chemical lamps, black light lamps, microwave-excited mercury lamps, and metal halide lamps. Of these, chemical lamps, which efficiently emit light in the active wavelength region of an initiator, absorb a small amount of light of the components of the polymerizable composition other than the initiator, and thus allow light to penetrate to the interior, are effective.

The irradiation of the photopolymerization composition with the lamp emitting light is adjusted to an appropriate intensity according to the performance of each target product. When a general-purpose cleavable initiator containing an acetophenone group is used, the light intensity in the wavelength range effective for photodegradation of the initiator (which varies depending on the initiator; usually light of 365 nm to 420 nm is used) is preferably 0.1 to 100 mW/cm$^2$.

The acrylic adhesive containing a (meth)acrylate copolymer may contain a tackifier resin. In terms of a method for adding a tackifier resin to the acrylic adhesive, it is possible to add a tackifier resin together with other additives after the polymerizable composition is polymerized. However it is preferred to add a tackifier resin to the polymerizable composition in advance, and then perform polymerization under light irradiation.

When polymerization is performed after a tackifier resin is added to a polymerizable composition, the polymerization speed can decrease, or the molecular weight can be reduced. Therefore, tackifier resins that hardly inhibit polymerization are suitably used, such as hydrogenated terpene resins, hydrogenated rosins, disproportionated rosin resins, and petroleum resins.

In particular, it is desirable to use hydrogenated petroleum resin as the tackifier resin to improve adhesive strength.

The softening point of the tackifier resin is not particularly limited. The softening point is preferably 120°C or more, from the standpoint of cohesive force.

The amount of the tackifier resin added is preferably 3 to 50 parts by weight, and more preferably 5 to 40 parts by weight, per 100 parts by weight of the (meth)acrylate copolymer. When the tackifier resin in an amount within this range is added, excellent adhesiveness, as well as excellent flexibility and heat resistance of the adhesive, are achieved.

The acrylic adhesive containing the (meth)acrylate copolymer preferably contains fine particles with an average particle size of 5 to 150 μm to improve adhesiveness and cohesive force. The fine particles are preferably homogeneously dispersed in the acrylic adhesive.

Examples of the fine particles include inorganic hollow particles, such as glass balloons, silica balloons, and fly ash balloons; organic hollow particles, such as polymethyl methacrylate, acrylonitrile-vinylidene chloride copolymers, polystyrenes, and phenolic resins; inorganic fine particles, such as glass beads, silica beads, and synthetic mica; and organic fine particles, such as ethyl polyacrylate, polyurethane, polyethylene, and polypropylene.

The fine particles are preferably contained in an amount of 0.15 wt% or more and 15 wt% or less in the acrylic adhesive. When the content of the fine particles is within the above range, the adhesiveness can improve more while suitable cohesive force can be created. The amount is more preferably 0.2 wt% or more and less than 5 wt%.

In terms of a method for adding the fine particles to the acrylic adhesive, it is possible to add the fine particles together with other additives after the polymerizable composition is polymerized. For more uniform dispersion and to enhance the effect of addition, it is preferred to add fine particles to the polymerizable composition in advance, and then perform polymerization under light irradiation.

The acrylic adhesive containing the (meth)acrylate copolymer preferably further contains a thixotropy-imparting agent, such as hydrophilic silica, to increase the viscosity of the polymerizable composition during production and to maintain the dispersion of the fine particles.

Various additive may optionally be added to the acrylic adhesive containing the (meth)acrylate copolymer. Examples of the additives include plasticizers, softeners, pigments, and dyes.

The acrylic adhesive containing the (meth)acrylate copolymer preferably has a gel fraction of 40 to 80%.

The adhesive having a gel fraction within this range exhibits improved adhesiveness and cohesive force. In addition, the self-repairing properties, which are the characteristic of the present invention, are more easily achieved. Furthermore, durability can be achieved under temperature-changing conditions. The lower limit of the gel fraction is more preferably 50%, still more preferably 55%, and even more preferably 60%. The upper limit of the gel fraction is more preferably 75%, and still more preferably 70%.

The gel fraction can be measured as follows. First, weight A of an adhesive is measured. After immersing this adhesive in tetrahydrofuran at 40°C for 48 hours, the insoluble portion is filtered through a 200-mesh wire screen, and air-dried at room temperature for 2 days. Then, dry weight B of the insoluble portion is measured. The gel fraction is determined according to the following formula.

$$\texttt{Gel fraction (\%) = (B/A) × 100 \quad (1)}$$

A: Weight of acrylic adhesive tape
B: Dry weight of the insoluble portion of acrylic adhesive tape after immersion in tetrahydrofuran at 40°C for 48 hours

2-2-2. Resin Sheet

The resin sheet can be any resin in sheet form that contains resin as a material. The resin sheet may contain components other than resin to the extent that the effect of the present invention is not significantly impaired. In this case, the total content of resin in the resin sheet is, for example, 50 mass% or more, preferably 70 mass% or more, more preferably 90 mass% or more, and still more preferably 95 mass% or more; and typically less than 100 mass%.

The resin can be any resin, and the resin for use as a resin component is, for example, preferably a synthetic resin, such as ethylene vinyl acetate copolymers (EVA), vinyl chloride, urethane, acrylic, acrylic urethane, polyolefin, polyethylene, polypropylene, silicone, polyethylene terephthalate, polyester, polystyrene, polyimide, polycarbonate, polyamide, polysulfone, polyethersulfone, and epoxy; and a synthetic rubber material, such as polyisoprene rubber, polystyrene-butadiene rubber, polybutadiene rubber, chloroprene rubber, acrylonitrile-butadiene rubber, butyl rubber, acrylic rubber, ethylene-propylene rubber, and silicone rubber. These resins can be used singly, or in a combination of two or more.

## 2-3. Reflective Layer

The reflective layer can be any layer that functions as a reflective layer for radio waves in a radio wave absorber. Examples of reflective layers include, but are not limited to, metal films.

The metal film can be any metal film that contains metal as a material. The metal film may contain components other than metal to the extent that the effect of the present invention is not significantly impaired. In this case, the total content of metal in the metal film is, for example, 30 mass% or more, preferably 50 mass% or more, more preferably 75 mass% or more, still more preferably 80 mass% or more, yet more preferably 90 mass% or more, particularly preferably 95 mass% or more, and very preferably 99 mass% or more; and typically less than 100 mass%.

The metal can be any metal. Examples of metals include aluminum, copper, iron, silver, gold, chromium, nickel, molybdenum, gallium, zinc, tin, niobium, and indium. Metal compounds, such as ITO, are also usable as a material of metal films. These metals can be used singly, or in a combination of two or more.

The thickness of the reflective layer is not particularly limited. The thickness of the reflective layer is, for example, 1 $\mu$m or more and 500 $\mu$m or less, preferably 2 $\mu$m or more and 200 $\mu$m or less, and more preferably 5 $\mu$m or more and 100 $\mu$m or less.

The layer structure of the reflective layer is not particularly limited. The reflective layer may be composed of a single reflective layer, or a combination of two or more reflective layers.

## 2-4. Support

The radio wave absorber of the present invention preferably further comprises a support. This protects the resistive film and increases the durability of the radio wave absorber. The support can be any material in sheet form. Examples of supports include, but are not limited to, resin base materials.

The resin base material refers to a base material that contains resin as a material, and can be any resin material in sheet form. The resin base material may contain components other than resin to the extent that the effect of the present invention is not significantly impaired. For example, from the standpoint of adjusting relative permittivity, the resin base material may contain titanium oxide. In this case, the total content of resin in the resin base material is, for example, 80 mass% or more, preferably 90 mass% or more, more preferably 95 mass% or more, and still more preferably 99 mass% or more; and typically less than 100 mass%.

Examples of resins include, but are not limited to, polyester-based resins, such as polyethylene terephthalate (PET), polyethylene naphthalate, and modified polyester; polyolefin resins, such as polyethylene (PE) resin, polypropylene (PP) resin, polystyrene resin, and cyclic olefin-based resins; vinyl-based resins, such as polyvinyl chloride and polyvinylidene chloride; polyvinyl acetal resins, such as polyvinyl butyral (PVB); polyether ether ketone (PEEK) resin, polysulfone (PSF) resin, polyether sulfone (PES) resin, polycarbonate (PC) resin, polyamide resin, polyimide resin, acrylic resin, and triacetyl cellulose (TAC) resin. These resins can be used singly, or in a combination of two or more.

Of these, from the standpoint of productivity and strength, polyester-based resins are preferable, and polyethylene terephthalate is more preferable.

The relative permittivity of the support can be any value. The relative permittivity of the support is, for example, 1 to 20, 1 to 15, more preferably 1 to 10, and even more preferably 1 to 5.

The relative permittivity of the support can be measured in the same manner as the relative permittivity of the dielectric layer.

The thickness of the support is not particularly limited. The thickness of the support is, for example, 5 $\mu$m or more and 500 $\mu$m or less, preferably 10 $\mu$m or more and 300 $\mu$m or less, and more preferably 20 $\mu$m or more and 300 $\mu$m or less.

The layer structure of the support is not particularly limited. The support may be composed of a single support, or a combination of two or more supports.

## 2-5. Layer Structure

In the radio wave absorber of the present invention, the layers are arranged in such an order as to enable the radio wave absorber to exhibit radio wave absorption performance. In an embodiment, the resistive film, the dielectric layer, and the reflective layer are arranged in this order.

When the radio wave absorber of the present invention includes a support, in an embodiment, the support, the resistive film, the dielectric layer, and the reflective layer are arranged in this order.

The radio wave absorber of the present invention may include another layer in addition to the support, the resistive film, the dielectric layer, and the reflective layer. Another layer may be stacked on one surface of the support, the resistive film, the dielectric layer, and/or the reflective layer.

3. Production Method

The radio wave absorber of the present invention can be obtained in accordance with or based on various methods, such as a known production method according to its structure. For example, the radio wave absorber can be obtained by a method including the step of sequentially stacking the resistive film, the dielectric layer, and the reflective layer on the support.

The method for stacking layers can be any method.

The resistive film can be stacked, for example, by sputtering, vacuum deposition, ion plating, chemical vapor deposition, or pulsed laser deposition. Of these, from the standpoint of film thickness controllability, sputtering is preferable. Sputtering can be of any type; examples include DC magnetron sputtering, high-frequency magnetron sputtering, and ion beam sputtering. The sputtering device may be of a batch system or a roll-to-roll system.

The dielectric layer and the reflective layer can be stacked, for example, by using the adhesiveness of the dielectric layer.

4. $\lambda/4$ Radio Wave Absorber Member

In one embodiment, the present invention relates to a $\lambda/4$ radio wave absorber member comprising a resistive film and a dielectric layer, the dielectric layer having self-repairing properties, the self-repairing properties being defined such that a needle with a diameter of 0.5 mm is vertically inserted into the radio wave absorber member from a surface of the resistive film not facing the dielectric layer to penetrate through to the rear surface of the radio wave absorber member, the needle is removed 10 seconds after penetration, the result is left at room temperature for 7 days, and a value subsequently obtained by subtracting the thickness of the layers other than the dielectric layer in the radio wave absorber member from an average value (average hole depth) obtained by using a color 3D laser microscope (VK8710, produced by Keyence Corporation, or an equivalent product) to measure hole depths in 1000 discretionary points separated from each other by 5 $\mu$m on the side on which the holes are opened in the radio wave absorber member is less than 4/5 of the thickness of the dielectric layer (or the sum of the thicknesses when the dielectric layer comprises multiple layers). In one embodiment, the present invention also relates to a $\lambda/4$ radio wave absorber member comprising a support, a resistive film, and a dielectric layer containing an adhesive having a gel fraction of 40 to 80%. The $\lambda/4$ radio wave absorber member is a member for forming a $\lambda/4$ radio wave absorber by arranging it in contact with an adherend. The resistive film, the dielectric layer, the self-repairing properties, and other configurations are as described for the $\lambda/4$ radio wave absorber of the present invention.

5. Application

The radio wave absorber of the present invention can be used in order to reduce radio wave interference and noise in an intelligent transport system (ITS) that communicates between automobiles, roads, and people; and in millimeter-wave radar for use in automotive collision-avoidance systems. Accordingly, in one embodiment, the present invention relates to a millimeter-wave radar that includes the radio wave absorber of the present invention.

The radio wave absorber of the present invention can also be used as an optical transceiver or a member for handling radio waves in, for example, next-generation mobile communications systems (5G) and short-distance wireless transfer techniques.

The frequency of the radio wave targeted by the radio wave absorber of the present invention is, for example, 1 to 150 GHz, preferably 10 to 100 GHz, more preferably 50 to 90 GHz, and still more preferably 65 to 90 GHz.

Examples

The present invention is described in detail with reference to Examples below. However, the present invention is not limited to the Examples.

(1) Production of Adhesive

Reference Example 1

Eighty-five parts by weight of 2-ethylhexyl acrylate, 15 parts by weight of butyl acrylate, 5 parts by weight of acrylic acid, 0.15 parts by weight of 2,2-dimethoxy-2-phenylacetophenone (Irgacure (registered trademark) 651, BASF), and 0.15 parts by weight of hexanediol diacrylate were uniformly mixed to produce a polymerizable composition. The resulting polymerizable composition was subjected to nitrogen purge to remove dissolved oxygen. Subsequently, the composition was coated onto the release-treated surface of a 50-$\mu$m-thick release-treated PET film. Then, another 50-$\mu$m-thick release-treated PET film was superimposed on the above release-treated PET film so that the release-treated surface faced the coated adhesive layer, and that the thickness of the adhesive layer was 0.5 mm. The intensity of a chemical lamp was adjusted so that the UV irradiation intensity at the PET film on the covered side was 5 mW/cm$^2$, and UV irradiation was carried out for 15 minutes, thereby obtaining an adhesive tape with a thickness of the adhesive layer of 0.5 mm.

Reference Example 2

Eighty-five parts by weight of 2-ethylhexyl acrylate, 15 parts by weight of butyl acrylate, 15 parts by weight of acrylic acid, 0.15 parts by weight of 2,2-dimethoxy-2-phenylacetophenone (Irgacure (registered trademark) 651, BASF), and 0.15 parts by weight of hexanediol diacrylate were uniformly mixed to produce a polymerizable composition. The resulting polymerizable composition was subjected to nitrogen purge to remove dissolved oxygen. Subsequently, the composition was coated onto the release-treated surface of a 50-$\mu$m-thick release-treated PET film. Then, another 50-$\mu$m-thick release-treated PET film was superimposed on the above release-treated PET film so that the release-treated surface faced the coated adhesive layer, and that the thickness of the adhesive layer was 0.5 mm. The intensity of a chemical lamp was adjusted so that the UV irradiation intensity at the PET film on the covered side was 5 mW/cm$^2$, and UV irradiation was carried out for 15 minutes, thereby obtaining an adhesive tape with a thickness of the adhesive layer of 0.5 mm.

Reference Example 3

Forty-five parts by mass of 2-ethylhexyl acrylate, 30 parts by mass of isobornyl acrylate, 25 parts by mass of 4-hydroxybutyl acrylate, 30 parts by mass of a tackifier resin (Alcon P-140, produced by Arakawa Chemical Industries, Ltd.), 0.05 parts by mass of dimethylaminopropyl acrylamide, and 0.05 parts by mass of 2,2-dimethoxy-2-phenylacetophenone (Irgacure (registered trademark) 651, BASF) were placed in a reactor equipped with a thermometer, a stirrer, a cooling tube, a UV irradiation device, and a viscometer. Then, a nitrogen purge was performed to remove dissolved oxygen. The inside of the reactor was irradiated with UV light until the viscosity (BH viscometer, No. 5 rotor, 10 rpm, measurement temperature: 25°C) reached about 4 Pa•s to produce an adhesive composition in which the monomer components were partially polymerized. Then, 0.05 parts by mass of a photopolymerization initiator (Irgacure (registered trademark) 651, produced by BASF) was added to a solution of the resulting adhesive composition, and stirred. The resulting solution was coated onto the release-treated surface of a release-treated polyethylene terephthalate film. Then, another release-treated polyethylene terephthalate film was superimposed on the above release-treated polyethylene terephthalate film so that the release-treated surface faced the coated adhesive layer, and that the thickness of the adhesive layer was 0.5 mm. The UV irradiation (2 mW/cm$^2$) was carried out with a chemical lamp for 360 seconds, thereby obtaining an adhesive tape with a thickness of the adhesive layer of 0.5 mm.

Reference Example 4

Forty-five parts by mass of 2-ethylhexyl acrylate, 30 parts by mass of isobornyl acrylate, 25 parts by mass of 4-hydroxybutyl acrylate, 40 parts by mass of a tackifier resin (Alcon P-140, produced by Arakawa Chemical Industries, Ltd.), 0.05 parts by mass of dimethylaminopropyl acrylamide, and 0.05 parts by mass of 2,2-dimethoxy-2-phenylacetophenone (Irgacure (registered trademark) 651, BASF) were placed in a reactor equipped with a thermometer, a stirrer, a cooling tube, a UV irradiation device, and a viscometer. Then, a nitrogen purge was performed to remove dissolved oxygen. The inside of the reactor was irradiated with UV light until the viscosity (BH viscometer, No. 5 rotor, 10 rpm, measurement temperature: 25°C) reached about 4 Pa•s to produce an adhesive composition in which the monomer components were partially polymerized. Then, 0.05 parts by mass of a photopolymerization initiator (Irgacure (registered trademark) 651, produced by BASF) was added to a solution of the resulting adhesive composition and stirred. The resulting solution was coated onto the release-treated surface of a release-treated polyethylene terephthalate film. Then, another release-treated polyethylene terephthalate film was superimposed on the above release-treated polyethylene terephthalate film so that the release-treated surface faced the coated adhesive layer, and that the thickness of the adhesive layer was 0.5 mm. The UV irradiation (2 mW/cm$^2$) was carried out with a chemical lamp for 360 seconds, thereby obtaining an adhesive tape with a thickness of the adhesive layer of 0.5 mm.

(2) Production of λ/4 Radio Wave Absorber: Part 1

Example 1

A polyethylene terephthalate (PET) film (relative permittivity: 3.4) into which titanium dioxide with a thickness of 125 μm was kneaded was prepared as a support.

On this PET film, a resistive film (formed of barrier layer 1, resistive layer, and barrier layer 2) with a surface resistance value of 331 Ω/□ was formed as follows. First, on the PET film, pulsed DC sputtering was performed using silicon as a target at an output of 1.0 kW by introducing Ar gas at a flow rate of 100 sccm and oxygen gas at a flow rate of 10 sccm at a pressure to 0.12 Pa, to thus form a barrier layer formed of silicon dioxide (barrier layer 1, thickness: 3.5 nm). Subsequently, a resistive layer with a surface resistance of 331 Ω/□ was formed on this barrier layer by pulsed DC sputtering. Sputtering was performed using Hastelloy C276 as a target at an output of 0.4 kW by introducing Ar gas at a flow rate of 100 sccm to adjust the pressure to 0.12 Pa. Then, on this resistive layer, pulsed DC sputtering was performed using silicon as a target at an output of 1.0 kW by introducing Ar gas at a flow rate of 100 sccm and oxygen gas at a flow rate of 10 sccm at a pressure to 0.12 Pa, to thus form a barrier layer formed of silicon dioxide (barrier layer 2, thickness: 2.2 nm).

Subsequently, a dielectric (thickness: 0.4 mm) formed of an adhesive (Reference Example 1) was stacked on the formed resistive film, and a reflective layer formed of aluminum with a thickness of 10 μm was stacked on the formed dielectric, thereby obtaining a λ/4 radio wave absorber.

Examples 2 to 3 and Comparative Example 2

λ/4 radio wave absorbers were obtained in the same manner as in Example 1, except that the surface resistance value of the resistive film was changed, and the adhesive was changed (Example 2: Reference Example 2, Example 3: Reference Example 3, Comparative Example 2: Reference Example 4).

Comparative Example 1

A resistive film (equivalent to a resistive layer) with a surface resistance value of 340 Q/□ was formed on the PET film in the same manner as in Example 1. Subsequently, a dielectric formed of polycarbonate with a thickness of 0.4 mm and a relative permittivity of was stacked on the formed resistive film via adhesive tape (two-sided acrylic adhesive tape, thickness: 30 μm, relative permittivity: 2.6). Additionally, a reflective layer formed of aluminum with a thickness of 10 μm was stacked on the dielectric via the same adhesive tape, thereby obtaining a λ/4 radio wave absorber.

(3) Production of λ/4 Radio Wave Absorber: Part 2

Examples 4 to 12 and Comparative Example 3

(3-1) Preparation of Dielectric Layer Material

According to the formulations (A to I) shown in Table 1 below, the materials were uniformly mixed with a dissolver to produce polymerizable compositions. The resulting polymerizable compositions were subjected to nitrogen purge to remove dissolved oxygen. Subsequently, a spacer with a thickness of 0.5 mm was placed on a 50-μm-thick release-treated PET film, and each of the above polymerizable compositions was spread over the release-treated PET. This PET film was then bent so that the release-treated surface is in contact with the polymerizable composition to cover the film.

In this state, the intensity of a chemical lamp was adjusted so that the UV irradiation intensity at the PET film on the covered side was 5 mW/cm$^2$, and UV irradiation was carried out for 15 minutes, thereby obtaining adhesive tapes A to I with a thickness of the adhesive layer of 500 μm.

The adhesive tapes obtained as above were used to measure the gel fraction as follows. Table 1 shows the results.

First, weight A of the adhesive tape from which the release-treated polyethylene terephthalate (PET) film was peeled off was measured. This adhesive tape was immersed in tetrahydrofuran at 40°C for 48 hours, the insoluble portion was then filtered through a 200-mesh wire screen and air-dried at room temperature for 2 days, and dry weight B of the insoluble portion was measured. The gel fraction was determined according to the following formula.

$$\text{Gel fraction (\%)} = (B/A) \times 100 \quad (1)$$

A: Weight of acrylic adhesive tape

B: Dry weight of the insoluble portion of acrylic adhesive tape after immersion in tetrahydrofuran at 40°C for 48 hours

Table 1

| | | A | B | C | D | E | F | G | H | I |
|---|---|---|---|---|---|---|---|---|---|---|
| Acrylic monomer (parts by weight) | 2-Ethylhexyl acrylate | 85 | 85 | 85 | 85 | 85 | 85 | 85 | 85 | 85 |
| | Butyl acrylate | 15 | 15 | 15 | 15 | 15 | 15 | 15 | 15 | 15 |
| | Acrylic acid | 5 | 5 | 5 | 5 | 5 | 5 | 5 | 5 | 5 |
| Olefin polymer having a polymerizable bond at the terminal (parts by weight) | | 10 | 10 | 10 | 10 | 10 | 10 | 10 | 10 | 10 |
| Polymerization initiator (parts by weight) | 2,2-Dimethoxy-2-phenylacetophenone | 0.15 | 0.15 | 0.15 | 0.15 | 0.15 | 0.15 | 0.15 | 0.15 | 0.15 |
| Hydrophilic silica (parts by weight) | | 3 | 3 | 3 | 3 | 3 | 3 | 3 | 3 | 3 |
| Multifunctional acrylate (parts by weight) | Ethoxylated trimethylolpropane triacrylate | 0 | 0 | 0.05 | 3 | 0 | 0 | 0 | 0 | 0.08 |
| | Liquid hydrogenated 1,2 polybutadiene acrylate | 0.8 | 0.6 | 0.8 | 0 | 0.8 | 0.8 | 0.8 | 0.4 | 0.8 |
| | Hexanediol diacrylate | 0 | 0 | 0 | 3 | 0 | 0 | 0 | 0 | 0 |
| Tackifier resin (parts by weight) | | 0 | 0 | 10 | 0 | 0 | 0 | 0 | 0 | 0 |
| Fine particles | Glass balloon (percent by weight) | 0.35 | 0.35 | 0.35 | 0 | 0.16 | 14.5 | 0 | 0.35 | 0.35 |
| Physical properties | Gel fraction | 64 | 54 | 73 | 83 | 63 | 62 | 63 | 44 | 79 |

Ethoxylated trimethylolpropane triacrylate: SR502, trade name, number average molecular weight: 692, produced by Nippon Kayaku Co., Ltd.

Liquid hydrogenated 1,2-polybutadiene acrylate: TEAI-1000, trade name, average molecular weight: 2250, produced by Nippon Soda Co., Ltd.

Olefin polymer having a polymerizable bond at the terminal: HPVM-L1253, trade name, produced by Kraton Polymers Japan Ltd.

Glass balloon: CEL-STAR Z-20, trade name, average particle size: 67 $\mu$m, true density: 0.17 to 0.23 g/m$^2$, produced by Tokai Kogyo Co., Ltd.

2,2-Dimethoxy-2-phenylacetophenone: Irgacure 651, trade name, produced by Ciba-Geigy

Hydrophilic silica: Aerosil A-200, trade name, produced by Nippon Aerosil Co., Ltd.

Tackifier resin: hydrogenated petroleum resin, softening point 100°C, Alcon P-100, trade name, produced by Arakawa Chemical Industries, Ltd.

(3-2) Production of λ/4 Radio Wave Absorber

Example 4

A polyethylene terephthalate (white PET) film with a thickness of 125 $\mu$m (relative permittivity 3.4) (U2L92W, produced by Teijin Film Solutions Limited) was prepared as a support.

On this PET film, a resistive film (barrier layer 1, resistive layer, barrier layer 2) was formed as follows. First, pulsed DC sputtering was performed by introducing gas of Ar and $O_2$ (the ratio being adjusted to 1:1) to adjust the pressure to 0.2 Pa to form a $SiO_2$ layer (barrier layer 1, thickness: 1 nm) . Subsequently, a resistive layer with a thickness of 10 nm and a surface resistance value of 340 $\Omega/\square$ was formed on barrier layer 1 by pulsed DC sputtering. Sputtering was performed using Hastelloy C276 as a target at an output of 0.4 kW by introducing Ar gas at a flow rate of 100 sccm to adjust the pressure to 0.12 Pa. Finally, barrier layer 2 (thickness: 1 nm) was formed in the same manner as barrier layer 1.

Next, a dielectric formed of adhesive tape A (dielectric constant: 2.5) with a thickness of 500 $\mu$m was stacked on the formed resistive film. Additionally, a reflective layer formed of copper with a thickness of 30 $\mu$m was stacked on the dielectric, thereby obtaining a λ/4 radio wave absorber.

Examples 5 to 12

λ/4 radio wave absorbers were obtained in the same manner as in Example 4, except that the type of the dielectric layer was changed as shown in Table 1.

Comparative Example 3

A λ/4 radio wave absorber was obtained in the same manner as in Example 4, except that a dielectric formed of polycarbonate with a thickness of 400 mm and a relative permittivity of 2.6 was stacked on the resistive film via adhesive tape (two-sided acrylic adhesive tape, thickness: 30 $\mu$m, relative permittivity: 3.0), and that a reflective layer formed of copper with a thickness of 30 $\mu$m was further stacked on the dielectric via the adhesive tape.

(4) Measurement of Shear Storage Modulus of Dielectric Layer

The shear storage modulus of the Reference Examples and polycarbonate were measured with a dynamic viscoelasticity measuring apparatus (ARES-G2, produced by TA Instruments Japan Inc., or an equivalent product) at a frequency of 10 Hz in the temperature range of -100°C to 250°C at a temperature rise rate of 5°C/min.

(5) Measurement of Glass-Transition Temperature of Dielectric Layer

The measurement was performed with a dynamic viscoelasticity measuring apparatus (ARES-G2, produced by TA Instruments Japan Inc., or an equivalent product) at a frequency of 10 Hz in the temperature range of -100°C to 250°C at a temperature rise rate of 5°C/min, and a glass-transition temperature Tg was determined.

(6) Measurement of Self-repairing Properties of Dielectric Layer

A needle with a diameter of 0.5 mm was vertically inserted into the radio wave absorber from a surface of the support of the absorber not facing the dielectric to penetrate through to the rear surface of the radio wave absorber. The needle was removed 10 seconds after penetration, and the result was left at room temperature for 7 days. Thereafter, a color 3D laser microscope (VK8710, produced by Keyence Corporation, or an equivalent product) was used to measure hole depths in 1000 discretionary points separated from each other by 5 $\mu$m on the side on which the holes are opened in the radio wave absorber. The average measurement value was considered to be an average hole depth. If a value obtained by subtracting the thickness of the support and the thickness of the resistive film from the average hole depth was less than 4/5 of the thickness of the dielectric layer (or the sum of the thicknesses when the dielectric layer included multiple layers), the dielectric layer was determined as having self-repairing properties.

(7) Evaluation of Radio Wave Absorption, and Radio Wave Absorption after Test for Bending Resistance at Low Temperatures

A network analyzer MS4647B (produced by Anritsu Corporation) and a free space-type material measurement device BD1-26.A (produced by Keycom Corporation) were used to construct a radio wave absorption measurement device. Using this radio wave absorption measurement device, the amount of radio wave absorption in the 55 to 90 GHz band in the obtained λ/4 radio wave absorbers was measured based on JIS R1679, and the radio wave absorption was evaluated before the test for bending resistance at low temperatures. The λ/4 radio wave absorber was set so that the radio waves were incident vertically and from the base material side.

Thereafter, the radio wave absorber was bent to a radius of curvature of 2 mm, and maintained in this state at -18°C for 24 hours. After the bending was released, the absorbers were allowed to stand at 25°C for 1 hour, and the radio wave absorption was evaluated in the same manner as in the evaluation of the radio wave absorption before the test for bending resistance at low temperatures.

The radio wave absorption performance with respect to the obtained amount of absorption was evaluated according to the following evaluation criteria.

A: The maximum value of the amount of radio wave absorption in the measurement range (55 to 90 GHz) was 25 dB or more.

B: The maximum value of the amount of radio wave absorption in the measurement range was less than 25 dB and 20 dB or more.

C: The maximum value of the amount of radio wave absorption in the measurement range was less than 20 dB.

(8) Heat Cycle (HC) Test and Measurement of Radio Wave Absorption Performance and Surface Resistance Before and After the Test

In Examples 4 to 12 and Comparative Example 3, a heat cycle (HC) test was further performed. In the heat cycle test (HC test), one cycle consisted of standing at -40°C for 30 minutes, followed by standing at an increased temperature of 125°C for 30 minutes. This cycle was repeated 1000 times.

(8-1) Measurement of Surface Resistance Before and After HC Test

The surface resistance was measured by four-terminal sensing with a surface resistance tester (Loresta-EP, trade name, produced by Mitsubishi Chemical Analytech Co., Ltd.).

(8-2) Measurement of Radio Wave Absorption Performance Before and After HC Test

For the measurement of radio wave absorption performance, a network analyzer MS4647B (produced by Anritsu Corporation) and a free space-type material measurement device BD1-26.A (produced by Keycom Corporation) were used to construct a radio wave absorption measurement device. Using this radio wave absorption measurement device, the amount of radio wave absorption in the 55 to 90 GHz band in the λ/4 radio wave absorbers was measured based on JIS R1679. Then, the amount of radio wave absorption (dB) at 79 GHz and the frequency (peak position) showing the maximum amount of radio wave absorption were measured. The λ/4 radio wave absorber was set so that the radio waves were incident vertically and from the base material side.

The radio wave absorption performance after the HC test and shifting of peak position were evaluated according to the following criteria.

- Radio wave absorption performance after HC test

A: The amount of radio wave absorption at 79 GHz after the HC test was 20 dB or more.
B: The amount of radio wave absorption at 79 GHz after the HC test was less than 20 dB.

- Shifting of peak position

A: The shifting of peak position before and after the HC test was less than 2 GHz.
B: The shifting of peak position before and after the HC test was 2 GHz or more and less than 5 GHz.
C: The shifting of peak position before and after the HC test was 5 GHz or more.

(8-3) Presence of Peeling-off of Stacked Layers

The radio wave absorber after the heat cycle test was visually analyzed, and evaluated as "No" when no lifting or peeling occurred in the laminate, and as "Yes" when lifting or peeling occurred.

(9) Results

Tables 2 and 3 show the results.

Table 2

| | | | Ex. 1 | Ex. 2 | Ex. 3 | Comp. Ex. 1 | Comp. Ex. 2 |
|---|---|---|---|---|---|---|---|
| Structure | | Relative permittivity of support | 3.4 | 3.4 | 3.4 | 3.4 | 3.4 |
| | | Thickness of support ($\mu$m) | 125 | 125 | 125 | 125 | 125 |
| | | Surface resistance of resistive film ($\Omega/\square$) | 331 | 335 | 334 | 340 | 330 |
| | | Type of dielectric | Ref. Ex. 1 | Ref. Ex. 2 | Ref. Ex. 3 | PC | Ref. Ex. 4 |
| | | Thickness of dielectric (mm) | 0.5 | 0.5 | 0.5 | 0.4 | 0.5 |
| | | Thickness of tape ($\mu$m) | - | - | - | 30 $\mu$m each | - |
| | | Relative permittivity of tape | - | - | - | 2.6 | - |
| Characteristics | | Shear storage modulus (Pa) | $8\times10^4$ | $7\times10^5$ | $9\times10^5$ | $1\times10^9$ | $1\times10^6$ |
| | | Glass-transition temperature (°C) | -20 | 20 | 30 | 150 | 45 |
| | | Self-repairing properties | Yes | Yes | Yes | No | No |
| Evaluation | | Radio wave absorption before test for bending resistance at low temperatures | A | A | A | A | A |
| | | Radio wave absorption after test for bending resistance at low temperatures | A | A | B | C | C |

Table 3

| | | Unit | Example | | | | | | | | | | Comparative Example |
| | | | 4 | 5 | 6 | 7 | 8 | 9 | 10 | 11 | 12 | 3 |
|---|---|---|---|---|---|---|---|---|---|---|---|---|
| Resistive film | Metal | - | Hastellov | | | | | | | | | |
| | Surface resistance value | $\Omega/\square$ | 340 | | | | | | | | | |
| | Thickness of resistive laver | nm | 10 | | | | | | | | | |
| Adhesive tape | Composition | - | - | - | - | - | - | - | - | - | - | Acrylic-based |
| | Thickness | $\mu$m | - | - | - | - | - | - | - | - | - | 30 |
| Dielectric layer | Structure | - | Tape A | Tape B | Tape C | Tape E | Tape F | Tape G | Tape H | Tape I | Tape D | Polycarbonate |
| | Gel fraction | % | 64 | 54 | 73 | 63 | 62 | 63 | 44 | 79 | 83 | - |
| | Thickness | $\mu$m | 500 | 500 | 500 | 500 | 500 | 500 | 500 | 500 | 500 | 400 |
| | Relative permittivity | - | 2.5 | 2.5 | 2.5 | 2.5 | 2.4 | 2.6 | 2.5 | 2.5 | 2.5 | 2.6 |
| Adhesive tape | Composition | - | - | - | - | - | - | - | - | - | - | Acrvlic-based |
| | Thickness | $\mu$m | - | - | - | - | - | - | - | - | - | 30 |
| Reflective Layer | Metal | - | Cu | | | | | | | | | |
| | Thickness | $\mu$m | 30 | | | | | | | | | |

(continued)

| Physical properties | | Unit | Example | | | | | | | | | Comparative Example |
| | | | 4 | 5 | 6 | 7 | 8 | 9 | 10 | 11 | 12 | 3 |
|---|---|---|---|---|---|---|---|---|---|---|---|---|
| Physical properties | Amount of absorption before HC (dB) | dB | 29 | 28.5 | 29.6 | 28 | 26 | 27 | 29 | 29 | 28.9 | 47.2 |
| | Peak position before HC | GHz | 68 | 67.4 | 68.1 | 67.5 | 68.2 | 67.2 | 68 | 68 | 67.6 | 95 |
| | Amount of absorption after HC | dB | 31.9 | 32.4 | 33 | 31.9 | 31.9 | 31.9 | 31.9 | 31.9 | 32.8 | 45.7 |
| | Peak position after HC | GHz | 67.2 | 66.5 | 65.2 | 67.1 | 67.8 | 66.9 | 67.2 | 67.2 | 63.4 | 89.1 |
| | Surface resistance before HC | $\Omega/\square$ | 378 | 373 | 373 | 379 | 378 | 376 | 378 | 378 | 373 | 384 |
| | Surface resistance after HC | $\Omega/\square$ | 388 | 390 | 385 | 392 | 393 | 390 | 392 | 386 | 401 | 405 |
| | Shear storage modulus (Pa) | Pa | $1.0 \times 10^5$ | $0.9 \times 10^5$ | $1.1 \times 10^5$ | 0 | $1.9 \times 10^5$ | $2.1 \times 10^5$ | $0.8 \times 10^5$ | $1.9 \times 10^5$ | $2.1 \times 10^5$ | $1.0 \times 10^9$ |
| | Glass-transition temperature (°C) | °C | -51 | -52 | -50 | -56 | -53 | -51 | -55 | -51 | -50 | 150 |
| | Self-repairinq properties (Yes or No) | | Yes | Yes | Yes | Yes | Yes | Yes | Yes | Yes | Yes | No |
| Evaluation | Radio wave absorption after test for bending resistance at low temperatures | | A | A | A | A | A | A | A | A | A | C |
| | Radio wave absorption performance after HC | - | A | A | A | A | A | A | A | A | A | A |
| | Shiftinq of peak position | - | A | A | B | B | B | B | B | B | C | C |
| | Peeling-off of stacked layers | - | No | No | No | No | No | No | No | No | Yes | Yes |

Description of the Reference Numerals

1    support
2    resistive film
3    dielectric layer
4    reflective layer
5    adhesive layer
6    chassis

**Claims**

1. A $\lambda/4$ radio wave absorber comprising a resistive film, a dielectric layer, and a reflective layer,

    the dielectric layer having self-repairing properties,
    the self-repairing properties being defined such that a needle with a diameter of 0.5 mm is vertically inserted into the radio wave absorber from a surface on a side opposite to the reflective layer of the absorber to penetrate through to the rear surface of the radio wave absorber, the needle is removed 10 seconds after penetration, the result is left at room temperature for 7 days, and a value subsequently obtained by subtracting the thickness of the layers other than the dielectric layer and the reflective layer in the radio wave absorber from an average value (average hole depth) obtained by using a color 3D laser microscope (VK8710, produced by Keyence Corporation, or an equivalent product) to measure hole depths in 1000 discretionary points separated from each other by 5 $\mu$m on the side on which the holes are opened in the radio wave absorber is less than 4/5 of the thickness of the dielectric layer (or the sum of the thicknesses when the dielectric layer comprises multiple layers).

2. The $\lambda/4$ radio wave absorber according to claim 1,
    wherein the dielectric layer has a shear storage modulus of $8 \times 10^5$ Pa or less.

3. The $\lambda/4$ radio wave absorber according to claim 1 or 2,
    wherein the dielectric layer is an adhesive.

4. The $\lambda/4$ radio wave absorber according to any one of claims 1 to 3, wherein the dielectric layer has a glass-transition temperature of -80 to 30°C.

5. The $\lambda/4$ radio wave absorber according to any one of claims 1 to 4, wherein the dielectric layer contains an adhesive having a gel fraction of 40 to 80%.

6. The $\lambda/4$ radio wave absorber according to claim 5,
    wherein the dielectric layer has a relative permittivity of 1 to 10.

7. The $\lambda/4$ radio wave absorber according to claim 5 or 6,
    wherein the adhesive contains a copolymer having a constituent unit derived from an alkyl (meth)acrylate containing 2 to 14 carbon atoms.

8. The $\lambda/4$ radio wave absorber according to claim 7,
    wherein the copolymer has a constituent unit derived from an olefin polymer.

9. The $\lambda/4$ radio wave absorber according to any one of claims 5 to 8, wherein the adhesive contains fine particles with an average particle size of 5 to 150 $\mu$m in an amount of 0.15 to 15 wt%.

10. A $\lambda/4$ radio wave absorber comprising a resistive film, a dielectric layer containing an adhesive having a gel fraction of 40 to 80%, and a reflective layer.

11. A millimeter-wave radar comprising the $\lambda/4$ radio wave absorber of any one of claims 1 to 10.

12. A $\lambda/4$ radio wave absorber member comprising a resistive film and a dielectric layer,

the dielectric layer having self-repairing properties,

the self-repairing properties being defined such that a needle with a diameter of 0.5 mm is vertically inserted into the radio wave absorber member from a surface of the resistive film not facing the dielectric layer to penetrate through to the rear surface of the radio wave absorber member, the needle is removed 10 seconds after penetration, the result is left at room temperature for 7 days, and a value subsequently obtained by subtracting the thickness of the layers other than the dielectric layer in the radio wave absorber member from an average value (average hole depth) obtained by using a color 3D laser microscope (VK8710, produced by Keyence Corporation, or an equivalent product) to measure hole depths in 1000 discretionary points separated from each other by 5 $\mu$m on the side on which the holes are opened in the radio wave absorber member is less than 4/5 of the thickness of the dielectric layer (or the sum of the thicknesses when the dielectric layer comprises multiple layers).

13. A $\lambda$/4 radio wave absorber member comprising a support, a resistive film, and a dielectric layer containing an adhesive having a gel fraction of 40 to 80%.

Fig. 1

1
2
3
4

Fig. 2

2
3
4

Fig. 3

1
2
3

4

Fig. 4

<table>
<tr><td colspan="2" align="center">**INTERNATIONAL SEARCH REPORT**</td><td>International application No.<br>PCT/JP2020/012757</td></tr>
</table>

**A. CLASSIFICATION OF SUBJECT MATTER**
H01Q 17/00(2006.01)i; H05K 9/00(2006.01)i; B32B 7/022(2019.01)i; B32B 7/025(2019.01)i
FI: H05K9/00 M; B32B7/022; H01Q17/00; B32B7/025
According to International Patent Classification (IPC) or to both national classification and IPC

**B. FIELDS SEARCHED**

Minimum documentation searched (classification system followed by classification symbols)
H01Q17/00; H05K9/00; B32B7/022; B32B7/025

Documentation searched other than minimum documentation to the extent that such documents are included in the fields searched
Published examined utility model applications of Japan 1922–1996
Published unexamined utility model applications of Japan 1971–2020
Registered utility model specifications of Japan 1996–2020
Published registered utility model applications of Japan 1994–2020

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2018-117073 A (NITTO DENKO CORP.) 26.07.2018 (2018-07-26) paragraphs [0015]-[0027] | 1-13 |
| A | JP 2018-147999 A (NITTO DENKO CORP.) 20.09.2018 (2018-09-20) paragraph [0057] | 1-13 |
| A | JP 2011-249613 A (NITTO DENKO CORP.) 08.12.2011 (2011-12-08) paragraphs [0144]-[0145] | 1-13 |
| A | JP 10-219006 A (ASAHI GLASS CO., LTD.) 18.08.1998 (1998-08-18) paragraphs [0060]-[0061] | 1-13 |

☐ Further documents are listed in the continuation of Box C. ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

Date of the actual completion of the international search
22 June 2020 (22.06.2020)

Date of mailing of the international search report
07 July 2020 (07.07.2020)

Name and mailing address of the ISA/
Japan Patent Office
3-4-3, Kasumigaseki, Chiyoda-ku,
Tokyo 100-8915, Japan

Authorized officer

Telephone No.

Form PCT/ISA/210 (second sheet) (January 2015)

**INTERNATIONAL SEARCH REPORT**
Information on patent family members

International application No.

PCT/JP2020/012757

| Patent Documents referred in the Report | Publication Date | Patent Family | Publication Date |
|---|---|---|---|
| JP 2018-117073 A | 26 Jul. 2018 | (Family: none) | |
| JP 2018-147999 A | 20 Sep. 2018 | US 2019/0380232 A1 paragraph [0068] EP 3573439 A1 KR 10-2019-0102216 A CN 110383964 A | |
| JP 2011-249613 A | 08 Dec. 2011 | WO 2011/149037 A1 | |
| JP 10-219006 A | 18 Aug. 1998 | (Family: none) | |

Form PCT/ISA/210 (patent family annex) (January 2015)

**EP 3 952 022 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017163141 A